# FASCICULE DE BREVET EUROPEEN

(11) **EP 0 404 642 B1**
(45) Date de publication et mention de la délivrance du brevet: **10.11.1993**
(21) Numéro de dépôt: 90401656.5
(22) Date de dépôt: 14.06.1990
(51) Int. Cl.: G01C 22/02, G01P 3/495

(54) **Dispositif de recopie à distance d'un mouvement de rotation**
Vorrichtung zur Fernübertragung einer Drehbewegung
Repeater apparatus for rotational movement

(30) Priorité: 15.06.1989 FR 8907948
(43) Date de publication de la demande: 27.12.1990
(73) Titulaire: JAEGER, Société Anonyme Française, F-92303 Levallois Perret Cédex (FR)
(72) Inventeur: Boulet, Frédéric, F-78000 Versailles (FR); Picchetti, Andréa, F-92700 Colombes (FR); Schwartz, Jean-Claude, F-75019 Paris (FR)
(74) Mandataire: Bloch, Gérard

(56) Documents cités:
- FR-A- 2 169 971
- FR-A- 2 584 490

## Description

La présente invention a pour objet un dispositif de recopie à distance d'un mouvement de rotation en réponse à un premier signal périodique de fréquence proportionnelle à la vitesse du mouvement à recopier, dispositif comprenant :
- un moteur électrique à courant continu,
- des moyens de mesure de la vitesse de rotation de l'arbre de sortie dudit moteur, délivrant un deuxième signal périodique de fréquence proportionnelle à la vitesse mesurée, et,
- des moyens de commande dudit moteur en réponse auxdits premier et deuxième signaux périodiques, pour que son arbre de sortie recopie le mouvement à recopier.

Un tel dispositif est utilisé notamment à bord des véhicules automobiles, pour transmettre, sans liaison mécanique, et à l'aide uniquement d'une liaison électrique, le mouvement de rotation d'une des roues à un indicateur de vitesse et à un totalisateur kilométrique disposés sur le tableau de bord du véhicule.

On connaît déjà un tel dispositif, décrit dans le brevet français publié sous le numéro 2 584 490.

Ce dernier présente cependant l'inconvénient de mettre en oeuvre un microprocesseur, ce qui augmente son prix de revient et limite son emploi à des équipements dits "haut de gamme".

On connaît également un dispositif du type défini ci-dessus qui, ne mettant en oeuvre que des composants simples et bon marché, ne souffre pas de l'inconvénient précédent. Ce dispositif comprend un comparateur de phase, qui compare les phases du premier et du deuxième signal périodique et commande le moteur en conséquence. Ainsi, lorsqu'une transition montante, ou front de montée, du premier signal périodique, ou signal de commande, se produit avant la transition montante correspondante du deuxième signal périodique, ou signal de recopie, le comparateur de phase commande l'application au moteur de la tension maximale disponible, jusqu'à l'arrivée de la transition correspondante du signal de recopie. Inversement, lorsqu'une transition montante du signal de recopie arrive avant la transition montante correspondante du signal de commande, le comparateur de phase commande l'application au moteur d'une tension nulle, jusqu'à l'arrivée de la transition correspondante du signal de commande. Le reste du temps, le comparateur de phase commande l'application au moteur d'une tension intermédiaire. Il en résulte, de manière évidente, la recopie du mouvement de rotation. Toutefois, lorsque la vitesse de rotation du mouvement à recopier est très faible, les impulsions de tensions qui commandent le moteur sont éloignées les unes des autres, et le moteur ayant une faible inertie, il apparaît des variations brusques de sa vitesse qui occasionnent par exemple des sauts de l'aiguille de l'indicateur de vitesse lorsque, comme cela est souvent le cas, le dispositif est utilisé afin de transmettre sur le tableau de bord, le mouvement de rotation d'une des roues. Ceci empêche donc de fournir au conducteur du véhicule une indication valable pour les faibles vitesses. De plus, lorsque se produisent de brusques variations de vitesse du mouvement à recopier, par exemple au moment d'une forte accélération, il se peut qu'une transition montante du signal de commande se produise avant la transition montante du signal de recopie relative à la transition montante précédente du signal de commande. Il en résulte qu'une telle transition montante du signal de recopie est ignorée. Une telle perte d'information est une source d'erreur lorsque l'arbre de sortie du moteur commande un totalisateur kilométrique qui permet l'affichage de la distance parcourue. En effet, il est important, dans ce cas, que le nombre de tours effectués par le moteur soit aussi proche que possible du nombre de tours effectués par la roue, et toute information perdue est donc une source d'erreur. Naturellement, lors de décélérations brutales, une perte d'information ayant une conséquence inverse de la précédente intervient, mais il ne se produit pas de compensation parfaite des erreurs lors des accélérations et lors des décélérations et l'indication de la distance parcourue reste fausse.

Le brevet français No. 2 169 971 décrit un dispositif qui ne souffre pas des inconvénients précédents et dans lequel les moyens de commande comprennent :
- un compteur-décompteur pourvu d'une entrée de comptage recevant l'un desdits premier et deuxième signaux périodiques, d'une entrée de décomptage recevant l'autre desdits premier et deuxième signaux périodiques, et d'une sortie numérique, et,
- un convertisseur numérique-analogique pourvu d'une entrée numérique reliée à la sortie dudit compteur-décompteur et d'une sortie analogique reliée audit moteur.

Dans ce dispositif, du fait que le moteur est commandé par la sortie du convertisseur numérique-analogique, la tension de commande du moteur est susceptible de prendre un beaucoup plus grand nombre de valeurs différentes, que les trois valeurs qu'elle était susceptible de prendre dans le dispositif précédent. De plus, la commande de cette tension par un compteur-décompteur introduit une intégration, et donc un lissage des variations. Ainsi, à très basse vitesse, lorsqu'une transition du signal de commande se présente avant la transition correspondante du signal de recopie, parce que le moteur ne tourne pas assez vite, par exemple, la tension de sortie du moteur se trouve augmentée afin de lui faire rattraper son retard. Toutefois, la sortie du compteur-décompteur ne se trouve augmentée que d'une unité, et celle du convertisseur numérique-analogique de l'intervalle de quantification correspondant. Une telle augmentation est évidemment beaucoup plus faible que dans le dispositif précédent où, dans une situation analogue, la tension de commande du moteur prend la valeur maximale disponible.

Dans ce dispositif, il ne peut se produire de variations brusques de la vitesse de rotation du moteur, même lorsque la vitesse du mouvement à recopier est faible.

Dans ce dispositif, le convertisseur numérique-analogique comprend un circuit d'évaluation qui constitue la branche d'un pont dont la différence de potentiel dans la diagonale zéro sert au moteur à courant continu de tension de commande. Il en résulte que le circuit de commande est relativement complexe, coûteux et encombrant.

La présente invention vise à pallier les inconvénients précédents en procurant un dispositif de recopie qui ne nécessite pas impérativement la mise en oeuvre d'un microprocesseur, et qui soit simple, et d'un prix de revient et d'un coût relativement bas, tout en fonctionnant de façon satisfaisante pour les faibles valeurs de la vitesse du mouvement à recopier. De plus, l'invention vise à procurer un dispositif dans lequel aucune information n'est perdue lors des variations brusques de la vitesse à recopier, avec une plage de capture aussi étendue que possible, et un temps de réponse relativement court.

A cet effet, elle a pour objet un dispositif de recopie à distance d'un mouvement de rotation en réponse à un premier signal périodique (VC) de fréquence proportionnelle à la vitesse du mouvement à recopier, dispositif comprenant :
- un moteur (5) électrique à courant continu,
- des moyens de mesure (31,37) de la vitesse de rotation de l'arbre de sortie dudit moteur (5), délivrant un deuxième signal périodique (VM) de fréquence proportionnelle à la vitesse mesurée,
- un compteur-décompteur (61) pourvu d'une entrée de comptage recevant l'un (VC) desdits premier et deuxième signaux périodiques, d'une entrée de décomptage recevant l'autre (VM) desdits premier et deuxième signaux périodiques, et d'une sortie numérique, et,
- un convertisseur numérique-analogique (62) pourvu d'une entrée numérique reliée à la sortie dudit compteur-décompteur (61) et d'une sortie analogique reliée audit moteur (5),

dispositif caractérisé par le fait que ledit convertisseur numérique-analogique (62) est du type qui convertit un signal numérique (VN) en un signal analogique (VS) comprenant un train d'impulsions de fréquence de récurrence constante et de largeur commandée par ledit signal numérique (Vn).

Un tel convertisseur numérique-analogique est d'une structure simple, et le moteur s'accomode bien de la forme particulière du signal analogique qui lui est appliqué, lorsque l'on prend soin de choisir une fréquence de récurrence élevée par rapport à la fréquence de coupure des circuits disposés en aval de façon à ce que tout se passe comme si la valeur moyenne du signal analogique en sortie du convertisseur numérique-analogique était appliquée au moteur.

Par ailleurs, du fait que le compteur-décompteur prend immédiatement en compte toute transition des signaux appliqués à son entrée de comptage ou à son entrée de décomptage, il n'y a aucune perte d'information dans le dispositif de l'invention.

Avantageusement, ledit convertisseur numérique-analogique comprend :
- des moyens pour engendrer un signal d'horloge,
- un compteur pourvu d'une entrée de comptage recevant ledit signal d'horloge, et d'une sortie numérique, et,
- un comparateur numérique pourvu d'une première entrée numérique reliée à la sortie dudit compteur-décompteur, d'une deuxième entrée numérique reliée à la sortie dudit compteur, et d'une sortie binaire formant la sortie dudit convertisseur numérique-analogique.

On obtient dans ce cas une forme de réalisation ne mettant principalement en oeuvre que des circuits numériques simples et donc facile à intégrer pour une production en série.

La présente invention sera mieux comprise grâce à la description suivante de la forme de réalisation préférée du dispositif de l'invention, faite en se référant aux dessins annexés, sur lesquels,
- la figure 1 représente un schéma d'un dispositif de recopie du mouvement de rotation de l'arbre d'une des roues d'une automobile, en vue de l'affichage de la vitesse de cette automobile et de la totalisation des kilomètres qu'elle parcourt,
- la figure 2 représente un schéma par blocs du circuit électronique du dispositif de la figure 1, et,
- la figure 3 représente, de façon plus détaillée, le convertisseur numérique-analogique, faisant partie du circuit électronique de la figure 2.

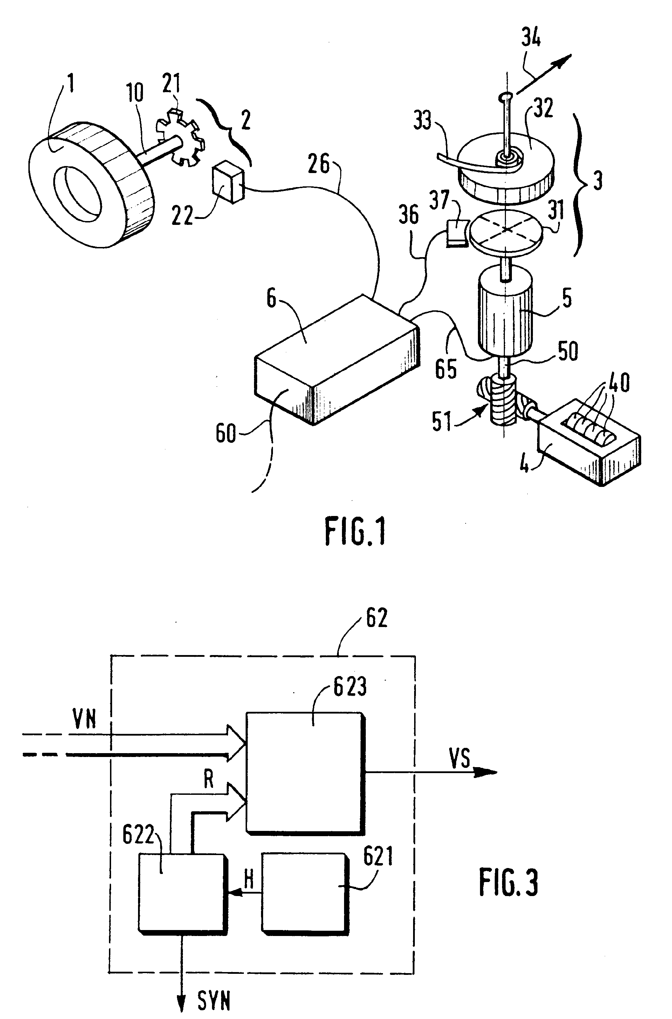

En référence à la figure 1, une automobile, dont seule une roue 1 est représentée, et à bord de laquelle la vitesse et la distance parcourue sont à afficher, est pourvue à cet effet d'un capteur de vitesse 2 monté sur l'arbre 10 de la roue 1, et d'un dispositif d'affichage ou indicateur de vitesse 3, ainsi que d'un totalisateur, ou compteur kilométrique 4, montés sur le tableau de bord.

Un moteur électrique 5, à courant continu, est pourvu d'un arbre de sortie 50 relié directement à l'indicateur de vitesse 3 et, ici par l'intermédiaire d'une liaison 51 à vis sans fin et roue hélicoïdale, ou totalisateur kilométrique 4.

Un circuit électronique 6 est connecté électriquement au capteur de vitesse 2 par une connexion 26, à l'indicateur de vitesse 3 par une connexion 36, et au moteur 5 par une connexion 65.

Le capteur de vitesse 2, de type connu, comprend ici une roue d'entée 21 en matériau ferro-magnétique et un capteur magnéto-électrique 22 dont la sortie est reliée à la connexion 26.

L'indicateur de vitesse 3, de type connu, comprend un aimant permanent à quatre pôles 31, monté sur l'arbre 50, qui entraîne, par courants de Foucault, une coupelle conductrice, ou disque 32, solidaire d'une aiguille 34 se déplaçant devant un cadran (non représenté), le disque 32 et l'aiguille 34 étant rappelés par un ressort de rappel 33.

Le totalisateur kilométrique 4 est du type connu à tambours 40.

Un capteur magnéto-électrique 37, ici une sonde de Hall, est placé au voisinage de l'aimant permanent 31. Sa sortie est reliée à la connexion 36.

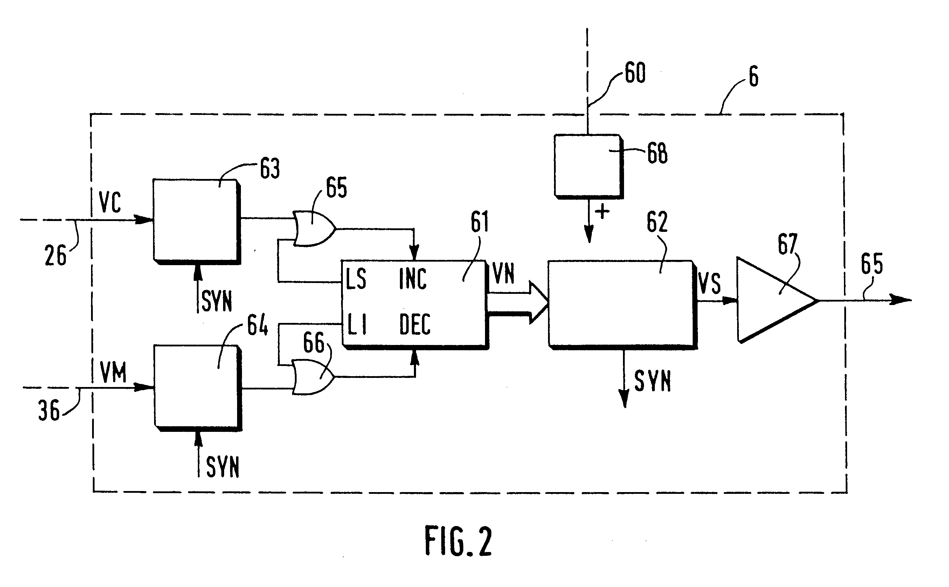

Le circuit électronique 6, connecté électriquement, par une connexion 60 à la batterie non représentée de l'automobile, est maintenant décrit en se référant à la figure 2.

Le circuit 6 comprend tout d'abord un circuit 68 d'alimentation en énergie électrique pourvu d'une entrée reliée à la connexion 60, et agencé pour délivrer à tous les composants du circuit 6 les tensions d'alimentation dont ils ont besoin. Les connexions correspondantes ne sont pas représentées dans un souci de simplification.

Le circuit électronique 6 comprend également deux circuits 63 et 64 de mise en forme et de synchronisation.

Le circuit 63 est pourvu d'une entrée binaire de synchronisation recevant un signal de synchronisation SYN, d'une entrée binaire de signal reliée à la connexion 26, sur laquelle il reçoit un signal VC, et d'une sortie binaire reliée à une première entrée d'une porte OU 65.

Le circuit 64 est pourvu d'une entrée binaire de synchronisation recevant le signal SYN, d'une entrée binaire de signal reliée à la connexion 36, sur laquelle il reçoit un signal VM, et d'une sortie binaire reliée à une première entrée d'une porte OU 66.

Un compteur-décompteur 61 est pourvu d'une entrée binaire de comptage INC reliée à la sortie de la porte OU 65, d'une entrée binaire de décomptage DEC reliée à la sortie de la porte OU 66, d'une sortie binaire LS indiquant que la limite supérieure de comptage est atteinte, sortie LS reliée à la deuxième entrée de la porte OU 65, d'une sortie binaire LI indiquant que la limite inférieure de comptage est atteinte, sortie LI reliée à la deuxième entrée de la porte OU 66, et d'une sortie numérique délivrant un signal numérique VN représentant le nombre de transitions présentées sur l'entrée INC diminué du nombre de transitions présentées sur l'entrée DEC.

Un convertisseur numérique-analogique 62 est pourvu d'une entrée numérique recevant le signal VN et d'une sortie analogique délivrant un signal VS à un amplificateur de puissance 67 dont la sortie est reliée à la connexion 65 de commande du moteur 5.

Ici, le convertisseur numérique-analogique 62 délivre le signal de synchronisation SYN, de fréquence élevée par rapport aux fréquences maximales des signaux VC et VM.

Avant de décrire, de façon plus détaillée, chacun des circuits de la figure 2, le fonctionnement d'ensemble du dispositif est maintenant abordé.

Le circuit 63 a pour fonction de mettre en forme et de synchroniser le signal VC. En effet, celui-ci est un signal périodique dont la fréquence est proportionnelle à la vitesse du mouvement à recopier, mais dont les transitions ne sont pas nécessairement franches et bien calées dans le temps. Afin de faciliter les traitements ultérieurs, le circuit 63 remplace toute transition du signal VC à laquelle on s'intéresse par une impulsion de largeur égale à une période du signal SYN, et dont les fronts coïncident avec ceux du signal SYN. Les transitions du signal VC auxquelles on s'intéresse sont soit les transitions montantes, soit les transitions descendantes, soit les deux.

De même, le circuit 64 met en forme et synchronise les transitions du signal VM, de façon analogue.

La porte OU 65 a pour fonction d'empêcher les impulsions en sortie du circuit 63 d'être appliquées à l'entrée INC lorsque le compteur-décompteur a atteint sa limite supérieure, c,est-à-dire lorsque la valeur VN est égale à sa valeur maximale. En effet, le signal LS est alors au niveau haut, et la sortie de la porte OU 65 est en permanence au niveau haut quel que soit le signal en sortie du circuit 65.

De façon similaire, la porte OU 66 a pour fonction d'empêcher les impulsions en sortie du circuit 64 d'être appliquées à l'entrée DEC lorsque le compteur-décompteur a atteint sa limite inférieure, c'est-à-dire lorsque la sortie VN est à zéro. Le signal LI est alors au niveau haut, et la sortie de la porte OU 66 est en permanence au niveau haut quel que soit le signal en sortie du circuit 64.

En fonctionnement normal aucune des deux situations précédentes ne se produit durablement puisque lorsque la sortie VN est égale à sa valeur maximale, la sortie VS prend sa valeur maximale, et le moteur 5 sa vitesse maximale, alors que lorsque la sortie VN est à 0, la sortie VS est également à zéro et le moteur 5 est court-circuité.

En fonctionnement normal, les transitions du signal VC sont comptées, ce qui augmente la valeur du signal numérique VN tandis que celles du signal VM sont décomptées, ce qui réduit la valeur du signal numérique VN. Donc, lorsque le moteur 5 est en retard sur le mouvement à recopier représenté par le signal VC, la valeur du signal numérique VN a tendance à augmenter, ce qui provoque une augmentation du signal VS ainsi que de la vitesse du moteur 5. Le retard se trouve ainsi compensé.

Par contre, si le moteur 5 est en avance sur le mouvement à recopier, la valeur du signal numérique VN a tendance à diminuer et en conséquence la vitesse du moteur se trouve réduite.

Il en résulte que la vitesse du mouvement de rotation de l'arbre de sortie est en permanence égale à celle du mouvement à recopier, sans variations brusques, même à faible vitesse, pour les raisons qui ont déjà été exposées.

Les circuits de la figure 2 sont maintenant décrits de façon plus détaillée.

Les circuits 63 et 64 de mise en forme et de synchronisation comprennent par exemple chacun deux bascules et une porte logique. La première bascule délivre un signal dont les transitions se produisent sur les transitions montantes du signal SYN, par exemple, et la seconde bascule retarde ce signal d'une période du signal SYN. La porte logique combine les signaux ainsi décalés en sortie de chacune des bascules pour produire les impulsions qui ont été décrites. La conception des circuits 63 et 64 est à la portée de l'homme du métier.

Le convertisseur numérique-analogique est décrit maintenant en référence à la figure 3. Il comprend un circuit d'horloge 621 qui engendre un signal d'horloge H, un compteur 622 pourvu d'une entrée de comptage recevant le signal H, et d'une sortie numérique délivrant un signal R. Un comparateur numérique 623 est pourvu de deux entrées numériques recevant les signaux VN et R respectivement, et d'une sortie binaire délivrant le signal VS, au niveau haut lorsque le signal VN est supérieur au signal R, et au niveau bas dans le cas contraire.

Ici, le signal d'horloge H est un signal à sensiblement 2 MHz, ou plus précisément 2²¹ Hz, et la sortie numérique délivrant le signal R comprend six bits. Il en résulte que le signal R est un signal numérique périodique de période 2¹⁵ Hz soit 32 768 Hz, et qui augmente linéairement avec le temps à l'intérieur de chaque période, depuis la valeur 0 en début de période jusqu'à la valeur 63 en fin de période. En début de période, la sortie VS est donc au niveau haut, et elle y reste jusqu'à ce que la valeur R passe par la valeur VN, ce qui provoque le passage au niveau bas de la sortie VS du comparateur 623. Il en résulte que le signal VS est un signal analogique qui comprend un train d'impulsions de fréquence de recurrence constante, ici 32 768 Hz, et de largeur commandée par le signal numérique VN. La valeur moyenne d'un tel signal est donc commandée par le signal numérique VN, et tout se passe comme si cette valeur moyenne était appliquée au moteur 5, du fait que ce dernier se comporte comme un filtre passe-bas de fréquence de coupure très inférieure à 32 kHz.

Ici, le signal SYN est le signal binaire représentant le sixième bit de la sortie délivrant le signal R. C'est donc un signal carré de fréquence 32 768 Hz, dont la période est donc toujours très faible par rapport à celle des signaux VC et VM.

Ici la valeur de la fréquence des signaux SYN et R a été choisie égale à sensiblement 32 kHz car cette valeur se situe au-delà du spectre audible, et ne sera à l'origine d'aucune vibration acoustique gênante pour l'utilisateur du véhicule. Naturellement, cette valeur de 32 kHz n'est pas critique, et il est suffisant que la valeur de la fréquence du signal R soit de l'ordre de quelques dizaines de kHz et que la fréquence du signal SYN soit supérieure au double de la fréquence d'entrée. S'il n'en est pas ainsi, et si la fréquence des signaux SYN et R est située dans le spectre audible, on place un filtre passe-bas en amont de l'amplificateur 67.

Dans le dispositif de l'invention, le comportement à faible vitesse est d'autant meilleur que la valeur maximale de la sortie numérique de compteur-décompteur 61 est élevée. En effet, dans ce cas, l'effet d'intégration du comptage-décomptage est important. Par contre, il en résulte une augmentation du temps de réponse en régime transitoire. La demanderesse a observé que, dans le cas décrit où la fréquence du signal d'horloge H est telle que la fréquence du signal numérique périodique R soit de sensiblement 32 kHz, un bon compromis consiste à choisir la valeur maximale du signal VN, ainsi que la valeur maximale du signal R, égale à 63. Dans ce cas, le temps de réponse reste relativement bref, et la stabilité à faible vitesse relativement bonne. La valeur 63 retenue ici vaut 2⁶-1, c'est-à-dire qu,elle est codée en binaire par 6 bits. Naturellement, l'homme du métier pourra choisir un nombre de bits supérieur ou inférieur selon la situation envisagée.

Dans l'exemple décrit ici, le compteur-décompteur 61 et le compteur 622 ont des capacités de 8 bits. Seuls les six premiers sont utilisés pour les signaux VN et R. Toutefois, le comparateur 623 est un comparateur 8 bits.

De façon non représentée dans un souci de simplicité, les deux bits de plus fort poids de son entrée recevant le signal VN reçoivent les deux bits de plus fort poids de la sortie du compteur-décompteur 61, tandis que les deux bits de plus fort poids de l'entrée recevant le signal R sont reliés à zéro. Il en résulte que même si la vitesse du mouvement à recopier est très élevée alors que celle du mouvement de l'arbre de sortie du moteur 5 est faible, le dispositif fonctionnera convenablement.

D'une manière générale, quelle que soit la différence entre la vitesse du mouvement à recopier et celle du moteur, le dispositif de l'invention finit toujours par commander le moteur pour qu'il recopie le mouvement à recopier. La plage de capture est donc aussi large que possible.

Naturellement, la portée de la présente demande n'est pas limitée à la description qui vient d'être faite. C'est ainsi que, en pratique, les portes OU 65 et 66 peuvent être supprimées, leur fonction étant assurée différemment, compte tenu des fonctions disponibles sur le ou les circuits utilisés pour réaliser le compteur-décompteur 61. De même, en pratique, il pourra être utile, au cas où une impulsion à compter se présente en même temps qu'une impulsion à décompter, de n'en appliquer aucune au compteur-décompteur. De tels aménagements sont naturellement à la portée de l'homme du métier.

## Revendications

1. Dispositif de recopie à distance d'un mouvement de rotation en réponse à un premier signal périodique (VC) de fréquence proportionnelle à la vitesse du mouvement à recopier, dispositif comprenant :
- un moteur (5) électrique à courant continu,
- des moyens de mesure (31,37) de la vitesse de rotation de l'arbre de sortie dudit moteur (5), délivrant un deuxième signal périodique (VM) de fréquence proportionnelle à la vitesse mesurée,
- un compteur-décompteur (61) pourvu d'une entrée de comptage recevant l'un (VC) desdits premier et deuxième signaux périodiques, d'une entrée de décomptage recevant l'autre (VM) desdits premier et deuxième signaux périodiques, et d'une sortie numérique, et,
- un convertisseur numérique-analogique (62) pourvu d'une entrée numérique reliée à la sortie dudit compteur-décompteur (61) et d'une sortie analogique reliée audit moteur (5),
dispositif caractérisé par le fait que ledit convertisseur numérique-analogique (62) est du type qui convertit un signal numérique (VN) en un signal analogique (VS) comprenant un train d'impulsions de fréquence de récurrence constante et de largeur commandée par ledit signal numérique (VN).

2. Dispositif selon la revendication 1, dans lequel ledit convertisseur numérique-analogique (62) comprend :
- des moyens (621) pour engendrer un signal d'horloge (H)
- un compteur (622) pourvu d'une entrée de comptage recevant ledit signal d'horloge (H), et d'une sortie numérique, et,
- un comparateur numérique (623) pourvu d'une première entrée numérique reliée à la sortie dudit compteur-décompteur (61), d'une deuxième entrée numérique reliée à la sortie dudit compteur (622), et d'une sortie binaire formant la sortie dudit convertisseur numérique-analogique (62).

3. Dispositif selon la revendication 2, dans lequel la valeur maximale de la sortie numérique dudit compteur-décompteur (61), ainsi que la valeur maximale de la sortie numérique dudit compteur (622) sont codées en binaire à l'aide d'un nombre de bits de l'ordre de six, et la fréquence dudit signal d'horloge (H) est telle que la fréquence du signal numérique périodique (R) en sortie dudit compteur (622) soit de l'ordre de quelques dizaines de kilohertz.

## Patentansprüche

1. Vorrichtung zur Fernübertragung einer Drehbewegung in Abhängigkeit von einem ersten periodischen Signal (VC) mit einer Frequenz, die der Geschwindigkeit der zu übertragenden Bewegung proportional ist, eine Vorrichtung, umfassend:
- einen Gleichstrom-Elektromotor (5),
- Mittel (31, 37) zur Messung der Drehgeschwindigkeit der Antriebswelle des Motors (5), die ein zweites periodisches Signal (VM) mit einer Frequenz liefern, die der gemessenen Geschwindigkeit proportional ist,
- einen Zähler-Abwärtszähler (61), versehen mit einem Zähleingang, der das eine (VC) der beiden vorgenannten periodischen Signale empfängt, mit einem Abwärtszähleingang, der das andere (VM) der beiden vorgenannten periodischen Signale empfängt, und mit einem Digitalausgang, und
- einen Digital-Analog-Umsetzer (62), versehen mit einem Digitaleingang, der mit dem Ausgang des Zähler-Abwärtszählers (61) verbunden ist, und mit einem Analogausgang, der mit dem Motor (5) verbunden ist,
eine Vorrichtung, dadurch gekennzeichnet, daß der DigitalAnalog-Umsetzer (62) von der Art ist, daß er ein digitales Signal (VN) in ein analoges Signal (VS) umwandelt, welches eine Folge von Impulsen mit einer konstanten Folgefrequenz und einer Breite, die von dem digitalen Signal (VN) gesteuert wird, umfaßt.

2. Vorrichtung nach Anspruch 1, bei welcher der DigitalAnalog-Umsetzer (62) umfaßt:
- Mittel (621) zur Erzeugung eines Taktsignals (H)
- einen Zähler (622), versehen mit einem Zähleingang, der das Taktsignal (H) empfängt, und mit einem Digitalausgang, und
- einen digitalen Komparator (623), versehen mit einem ersten Digitaleingang, der mit dem Ausgang des Zähler-Abwärtszählers (61) verbunden ist, mit einem zweiten Digitaleingang, der mit dem Ausgang des Zählers (622) verbunden ist, und mit einem Binärausgang, der den Ausgang des Digital-Analog-Umsetzers (62) bildet.

3. Vorrichtung nach Anspruch 2, bei welcher der maximale Wert des Digitalausgangs des Zähler-Abwärtszählers (61) sowie der maximale Wert des Digitalausgangs des Zählers (622) mittels einer Bitanzahl in der Größe von 6 binärcodiert sind und die Frequenz des Taktsignals (H) derart ist, daß die Frequenz des periodischen digitalen Signals (R) am Ausgang des Zählers (622) in der Größenordnung von einigen Zehn Kilohertz liegt.

## Claims

1. Device for transcribing a rotational movement by remote control in response to a first periodic signal (VC) with a frequency which is proportional to the speed movement to be transcribed, this device comprising :
- a dc electric motor (5),
- means (31,37) of measuring the speed of rotation of the output shaft of the said motor (5), delivering a second periodic signal (VM) with a frequency which is proportional to the speed measured,
- a counter-reverse-counter (61) provided with a counting input which receives one (VC) of the said first and second periodic signals, with a reverse counting input which receives the other (VM) of the said first and second periodic signals, and with a digital output, and,
- a digital-analog converter (62) provided with a digital input connected to the output of the said counter-reverse-counter (61) and with an analog output connected to the said motor (5),
device characterised by the fact that the said digital-analog converter (62) is of the type which converts a digital signal (VN) into an analog signal (VS) which comprises a set of pulses with a constant frequency of recurrence and whose width is controlled by the said digital signal (VN).

2. Device according to claim 1, in which the said digital-analog converter (62) comprises :
- means (621) of generating a clock signal (H)
- a counter (622) provided with a counting input which receives the said clock signal (H), and with a digital output, and,
- a digital comparator (623) provided with a first numerical input which is connected to the output of the said counter-reverse-counter(61), with a second digital input connected to the output of the said counter (622), and a binary output constituting the output of the said digital-analog converter (62).

3. Device according to claim 2, in which the maximum value of the digital output of the said counter-reverse-counter (61), as well as the maximum value of the digital output of the said counter (622) are binary coded by means of a number of bits of the order of six, and the frequency of the said clock signal (H) is such that the frequency of the periodic digital signal (R) at the output of the said counter (622) is of the order of several tens of kilohertz.
